# EUROPEAN PATENT APPLICATION

(11) **EP 0 708 574 A2**
(43) Date of publication of application: **24.04.1996**
(21) Application number: 95115115.8
(22) Date of filing: 26.09.1995
(51) Int. Cl.: H04Q 11/04

(54) **Device and method for the connection of a personal computer to an ATM network**

(30) Priority: 20.10.1994 IT MI942140
(71) Applicant: ITALTEL SOCIETA ITALIANA TELECOMUNICAZIONI s.p.a., I-20149 Milano (IT)
(72) Inventor: Merli, Edoardo, I-43100 Parma (IT); Pavesi, Marco, I-27029 Vigevano (PV) (IT); Marino, Gennaro, I-20094 Corsico (MI) (IT); Zizza, Fabrizio, I-28100 Novara (IT)
(74) Representative: Giustini, Delio

(57) **Abstract**

The invention relates to a device and a method for the connection of a personal computer to an ATM network. The device includes:
- a transputer board (TRANSP_BOARD) suitable to convert data of the subscriber's software programme format in an AAL-PDU format.
- a device (ATM_TRAN) carrying out specific functionalities of the ATM protocol layer;
- a device (ATM_TC) carrying out specific functionalities of the physical layer or PHY;
- a device (STTF) carrying out the terminal transfer function STM-1 and the termination function of the High Order Path for SDH;
- a serial to parallel converter (STFE).

## Description

### Field of the Invention

The present invention relates in general to broadband or B-ISDN (Broadband Integrated Service Digital Network) networks of the ATM type (Asynchronous Transfer Mode).

More specifically the invention relates to a device and a method for the connection of a personal computer to an ATM network.

The invention can be applied to all fields requiring a high transfer rate in the exchange of data between personal computers in a local area network (LAN) as well as in a wide area network (WAN).

These fields regard apart from the transfers of data files of arbitrary dimensions, the transfers of multimedia data such as full motion video, high definition sounds and images.

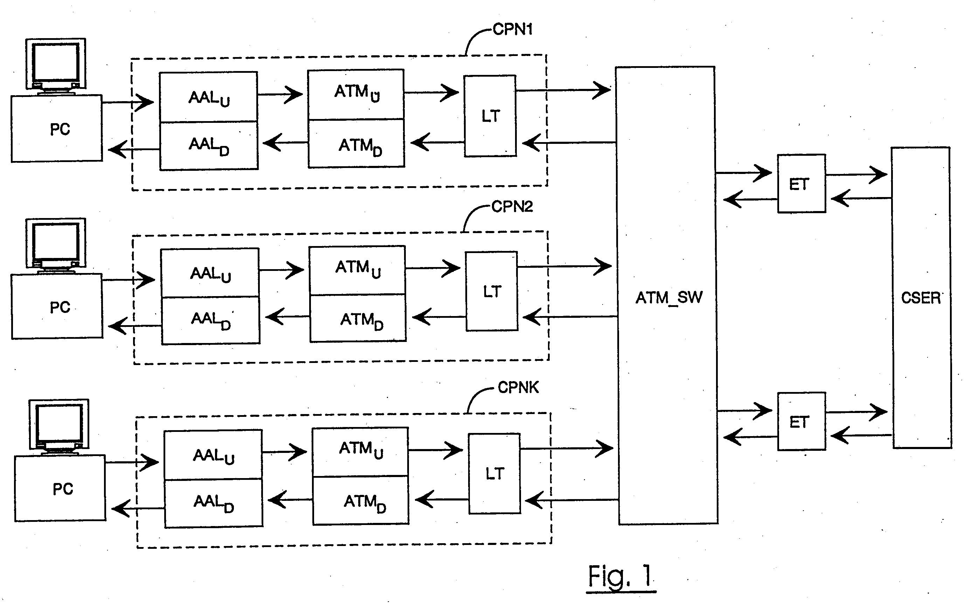

Fig. 1 shows just as an example an ATM node comprising schematically a switching network ATM_SW to which different access premises CPN1, ..., CPNK (Customer Premises Network) and a server CSER are connected.

To each one of the access premises CPN1, ...., CPNK one or more Personal Computers, indicated by PC, may be connected.

The data generated by the software programmes on the personal computers PC of the subscribers are structured in packages of variable lengths from a few bytes to tens of thousands of bytes.

In order to be able to transmit these packages on ATM networks it is necessary to adapt the format of the packet to the format of the ATM cell set up by 48 bytes of data or payload and by 5 header bytes for a total of 53 bytes. The packages are therefore segmentated to be introduced in the payloads of the ATM cells.

To be able to receive the data contained in the ATM cells it is necessary to assemble the cells in order to obtain again the message starting from the payloads of the ATM cells themselves.

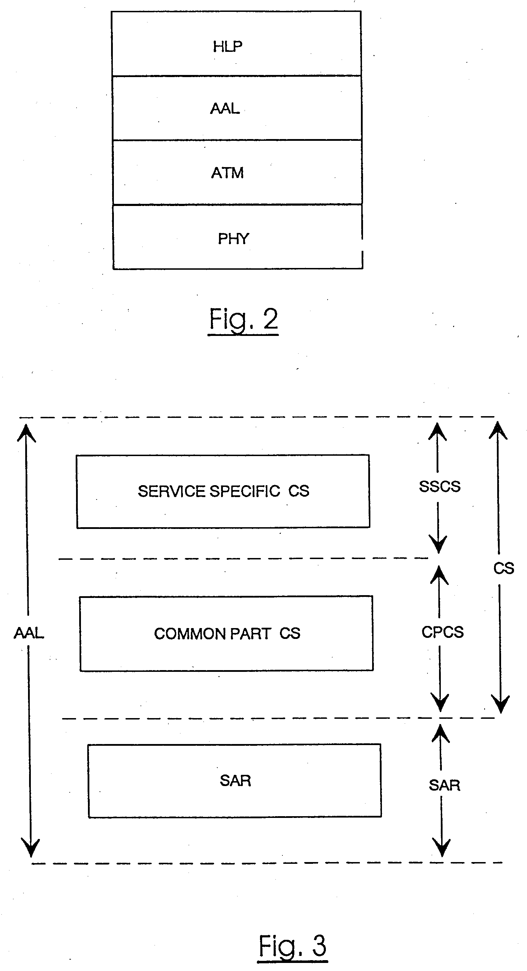

The conversion of such data packets in ATM cells to be transferred in line is realized through an orderly sequence or stack of protocols, schematically illustrated in Fig. 2 where the rectangles represent schematically the set of the operations carried out on the data by the different protocol layers.

The data transmission requires the execution of the protocols of different hierarchical levels from top to bottom (downstream), the reception from bottom to top (upstream).

Between the software programme level HLP (Higher Level Protocol) and the physical level PHY, there are two levels put between, an adaptation level labelled AAL (ATM Adaptation Layer) and an ATM level labelled ATM.

In Fig. 1 the functions of level ATM and AAL have been pointed out together with their locations in the different blocks CPN, being labeled by U and D the units connected on the upstream and on the downstream side, respectively.

The subscriber's plug through which the CPN network is connected to the ATM-SW network comprises a unit for the elaboration of the cell headers and a unit for the control of the traffic parameters linked to the different connections.

As shown in the enclosed Fig. 3 the protocol level AAL is subdivided in two sublayers and more precisely: the Convergence Sublayer (CS) and the Segmentation And Reassembly sublayer (SAR). The sublayer CS is at its turn subdivided in SSCS (Specific Service Convergence Sublayer) and CPCS (Common Part Convergence Sublayer).

The sublayer SSCS depends on the service and carries out different operations according to the software programme it is communicating with; the CPCS receives data blocks SSCS-PDU (SSCS Protocol Data Unit) with a length comprised between one and 64 kbytes, adds control data in the header and in the trailer to the received data block.

In this control data are contained the fields "CRC" (error control based on cyclical code) and "LENGTH" (length of the message).

The structure CPCS-PDU (CPCS Protocol Data) set up in this way is split up in portions of 48 bytes of the sublayer SAR.

This structure SAR-PDU (SAR Protocol Data Unit) of 48 bytes is then transferred to the ATM level which inserts it as payload into the ATM cell.

With reference to the structural scheme of Fig. 1 the execution of such protocols starting from the software programme level HLP up to the physical level PHY and vice versa implies the realization of the connection between the Personal Computers PC (HLP level) and line terminations LT (PHY level).

### Background Art

In order to realize these operations adapters are known for Personal Computers which are able to carry out, from the hardware point of view, the adaptation functions to the physical ATM connection, the serial-parallel and parallel-serial conversions, the alignment and the adaptation of the flows of ATM cells and the identification of the connections.

The necessary adaptation functions of the communication protocols between the ATM level and the software programmes executed by the PC are carried out through such adapter devices via software.

A first drawback of this first solution consists in the fact that, in this way, the processor of the Personal Computer turns out to be charged with heavy additional tasks slowing down considerably the performances of the Personal Computer during the normal execution of the software programmes.

A second drawback is on the other hand due to the fact that the implementation of the adaptation functions of the protocols is in this way extremely dependent on the architecture of the particular type of used Personal Computer and on the nature of its processor.

With this method, moreover, the realization of these functions turns out to be intrinsically little efficient and requires the use of powerful and expensive Personal Computers.

### Object of the Invention

A first object of the present invention is that to provide a method for the connection of a Personal Computer to an ATM type network which does not require the substantial resource use of the Personal Computer and making an execution possible with out slowing down the software processes realized by the Personal Computer.

A second object of the present invention is to provide an efficient communication method device which does not require for its realization the use of powerful and expensive Personal Computers.

It's the particular object of the present invention to provide a device for the connection of a Personal Computer to an ATM type network, substantially independent from the architecture of the Personal Computer and of the nature of its processor.

### Disclosure of the Invention

These and other objects are achieved by the invention which relates to a device for the connection of a personal computer to an ATM type network, said device being connected through an interface for personal computers to said personal computer and being connected through a serial interface to a line termination of said ATM type network, said personal computer carrying out transmission/reception means including the function of transmitting/receiving data towards/from said line termination of said ATM type network, the data being transmitted/received by said personal computer in a generic format, said line termination being suitable to exchange data in a physical ATM format in which the data relating to various services are organized under the form of data units with fixed length called ATM cells, characterized in that said device comprises a transputer board carrying out operations of transformation of the data transmitted by said personal computer with said generic programme format in data with a specific format of the ATM adaptation protocol level, and vice versa, and means carrying out operations of transformation of the data transmitted by said line termination with said physical format ATM in data with said specific format of said ATM adaptation protocol level, and vice versa.

The invention relates also to a method for the connection of a personal computer to an ATM type network, said personal computer carrying out software programmes which include the transmit/receive data function towards/from a line termination of said ATM type network, the data being transmitted/received by said personal computer in a generic format, the data being transmitted/received by said line termination in a physical ATM format in which the data relating to the different services are organized under the form of information units of fixed length called ATM cells, being the conversion of data transmitted by said personal computer in ATM cells realized through the following orderly sequence of protocol levels:
- software application level;
- ATM adaptation level;
- ATM level; and
- physical ATM level,
said ATM adaptation level being divided in:
- convergence sublayer, and
- segmentation and reassembly sublayer,
said convergence sublayer being divided in:
- service specific convergence sublayer; and
- common part convergence sublayer,
the conversion of the ATM cells in data receivable by said personal computer being realized through said orderly sequence of protocol levels carried out in an inverted order with respect to the previous order,
characterized in that the data transmitted by said personal computer with said software programme format are converted in data with a specific format of said ATM adaptation protocol level through a transputer board being independent of said personal computer, and by the fact that the data with said specific format of said ATM adaptation protocol level is converted in data with said software format through said transputer board.

### Brief Description of the Drawings

Further advantageous characteristics are the subject of the depending claims.

The features of the present invention which are believed to be novel are set forth with particularity in the appended claims. The invention, together with further objects and advantages thereof, may be understood with reference to the following description, taken in conjunction with the accompanying drawings and in which:
figure 1, already described, is a block diagram of an ATM switching node;
figure 2, already described, is the reference model of the protocols;
figure 3, already described, is the subdivision of the protocol level AAL;
figure 4 is a block diagram of a device according to the invention for the connection of a Personal Computer with the ATM network;
figure 5 shows in a more detailed way the structure of the parts of the device ATM_TRAN of figure 4 dedicated to the upstream data flow;
figure 6 shows in a more detailed way the structures of the parts of the device ATM_TRAN of figure 5 dedicated to the downstream data flow;
figure 7 is the format of a communication primitive between the various protocol levels of figure 2 and between the levels CPCS and SSCS of figure 3;
figure 8 is a flowchart indicating the execution of a first exchange operation of the intermodule primitive of figure 7;
figure 9 is a flowchart indicating the execution of a second exchange operation of the intermodule primitive of figure 7.

### Detailed Description of a Preferred Embodiment

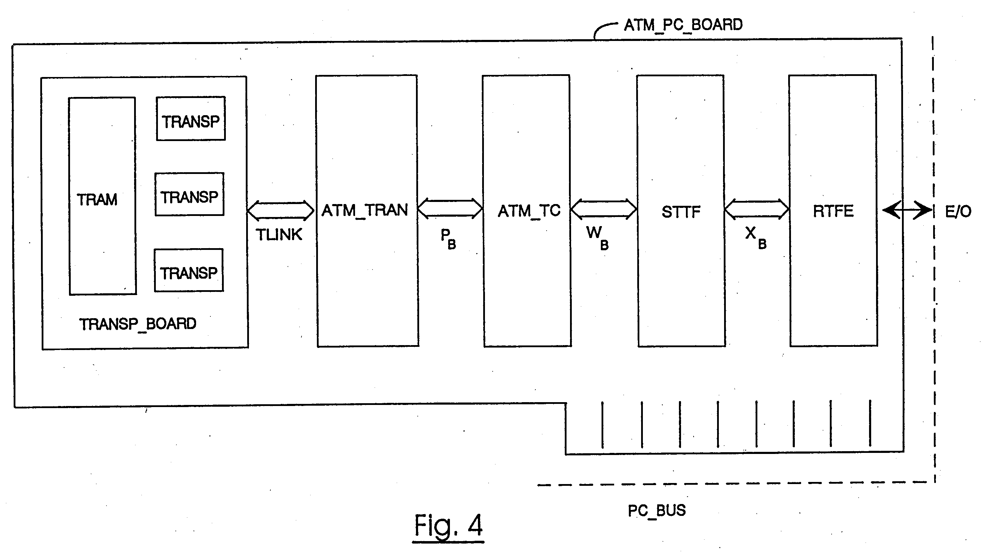

With reference to the enclosed figure 4 a device for the connection between a personal computer and an ATM network has been indicated as a whole by ATM_PC_BOARD.

The device ATM_PC_BOARD is connected to the bus of the personal computer though an interface PC_BUS, while being connected to the line terminations LT of the ATM network through a serial electro-optical interface E/O.

Such device ATM_PC_BOARD carries out all the above-mentioned protocol conversion operations, and realizes the connection between the Personal Computers PC (protocol level HLP) and the line terminations (physical level PHY).

According to the invention the device ATM_PC_BOARD includes a transputer board TRANSP_BOARD.

The transputer board TRANS_BOARD includes a plurality of transputer processors TRANSP and a storage unit TRAM. As well known, the transputer processors make it possible to implement a unit with parallel elaboration capacity, or a unit suitable to elaborate simultaneously several processes which interact. The memory TRAM of the board TRANSP_BOARD is completely separated from the memory of the personal computer.

The transputer board TRANSP_BOARD carries out all the operations necessary for the transformation of data from the subscriber software programme format to an AAL-PDU format (AAL Protocol Data Unit) of the adaptation level.

The transputer board TRANSP_BOARD is connected with a device ATM_TRAN by means of a transputer interface TLINK.

The device ATM_TRAN carries out specific functionalities of the ATM protocol level.

For what concerns the upstream flow such functions consist in the insertion of the header in the individual cells, in the creation of control codes HEC of the header of the cells and in the speed decoupling of the outgoing cells, while for what regards the downstream flow such functions consist in the selection of the ATM channels, in the examination of the control codes of the header of the cells, and in the speed decoupling of the incoming cells.

The device ATM_TRAN is connected through a parallel interface of 8 bits P_{B} with a device ATM_TC.

The device ATM_TC carries out all the specific functionalities of the physical level PHY.

For what concerns the upstream flow, such functions consist in the generation of the codes HEC, in the speed decoupling of the outgoing cells, in the extraction of the idle cells, or in those in which errors have been revealed, while for what regards the downstream flow such functions consist in the alignment of the arriving cells on the basis of the values of the codes HEC of the arriving cells, in the examination of the codes HEC and in the speed decoupling of incoming cells.

It is evident that some functions such as the management of the codes HEC, and the management of the speed decoupling may be carried out indifferently in the device ATM_TRAN and in the device ATM_TC.

The device ATM_TC is connected to a device STTF (SDH Transport Terminal Function) through a parallel interface of 8 bits W_{B}, and a device STTF (SDH Transport Terminal Function).

The device STTF carries out the functions of terminal transport STM-1 and of High Order Path termination for SDH.

The device STTF is connected to a serial parallel converter RTFE through a parallel interface of 4 bits X_{B}.

In the European patent application nr. 95200944.7 in the name of the same applicant, a serial to parallel converter suitable to operate at a speed up to 622.08 Mbits/sec is described.

For more details on the structure of the device RTFE see the relating patent application.

The advantages of a similar structure are evident.

All complex operations transforming the generated/received data by the software programme on personal computer are directly carried out by the transputers TRANSP of the board TRANSP_BOARD using the internal storage unit TRAM of the board itself.

In this way the processor of the personal computer is employed just in a very marginal way, and at the same time the internal RAM memory of the personal computer is not used by the processes accomplished by the board TRANSP_BOARD.

Therefore the normal execution of the software programmes on the personal computer are absolutely not slowed down.

As the board TRANSP_BOARD carries out functions which are accomplished by algorithms directly implemented on the board TRANSP_BOARD, the algorithms themselves are independent from the hardware and software architecture of the personal computer inside which the TRANSP_BOARD is installed.

This makes it possible to use the same hardware and software architecture for even very different types of personal computers.

Thanks to the power of the signal treatment of the transputers TRANSP, and thanks to the fact that the conversion functions from ATM level to physical level are accomplished completely through hardware inside the devices ATM_TRAN and ATM_TC, the device ATM_PC_BOARD turns out globally very efficient and fast.

Through a similar structure the device ATM_PC_BOARD turns also out to be easily upgraded.

In fact whenever there will be the necessity to realize more onerous software programmes from the point of view of the employment of the resources it will be sufficient to increase the number of transputers TRANSP installed on the board TRANSP_BOARD in order to face the new needs.

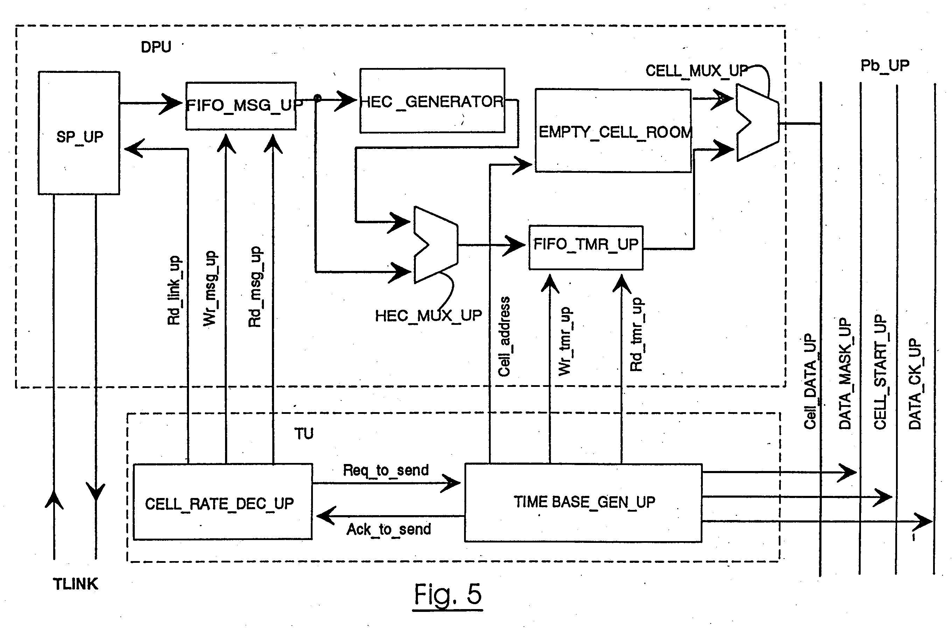

With reference to the enclosed figure 5 showing in a more detailed way the structure of the device ATM_TRAN, we will now illustrate with more details the functioning of the device ATM_TRAN during the processing of the data belonging to the upstream flow.

On the upstream side the device ATM_TRAN is divided in two blocks indicated by DPU (Data Path Upstream) and TU (Timing Upstream), respectively.

The block DPU of the device ATM_TRAN comprises a serial to parallel adapter SP_UP connected to the link transputer TLINK and to a memory FIFO_MSG_UP.

The memory FIFO_MSG_UP is connected to a generation block of HEC indicated by HEC_GENERATOR.

This block HEC_GENERATOR is connected to a memory FIFO_TMR_UP through a multiplexer HEC_MUX_UP.

The block DPU comprises also a memory EMPTY_CELL_ROM.

The memory EMPTY_CELL_ROM and the memory FIFO_TMR_UP are connected through a multiplexer CELL_MUX_UP to a bus Cell_DATA_UP of the parallel interface of 8 bits Pb_UP.

The block TU of the device ATM_TRAN comprises a control unit CELL_RATE_DEC_UP connected through two wires Wr_msg_up and Rd_Msg_up to the memory FIFO_MSG_UP of the block DPU.

The control unit CELL_RATE_DEC_UP is furthermore connected to the adaptor SP_UP of the block DPU through a wire Rd_link_up.

The block TU comprises also a time base generator TIME_BASE_GEN_UP connected through two wires Reg_to_send and Ack_to_send to the control unit CELL_RATE_DEC_UP.

The time base generator TIME_BASE_GEN_UP is also connected to three wires: DATA_MASK_UP, CELL_START_UP and DATA_CK_UP of the 8 bit-parallel interface Pb_UP.

The time base generator TIME_BASE_GEN_UP is furthermore connected through two wires wr_tmr_up and rd_tmr_up to the memory FIFO_TMR_UP and through a wire Cell_address to the empty cell container EMPTY_CELL_ROM.

On the upstream side the device ATM_TRAN works as follows.

The ATM cells enter in a serial way from the link transputer TLINK at a speed of 20 Mbit/s and are converted by the adapter SP_UP in a parallel format on 8 bits, always at a speed of 20Mbit/s.

Once converted, the cells are introduced in the memory FIFO_MSG_UP from where they are read in a parallel way on 8 bits at a speed of 155 Mbit/s.

In this way the memory FIFO_MSG_UP, from a physical point of view carries out a cell rate decoupling operation as it is written at 20 Mbit/s and read at 155 Mbit/s.

For each one of the read cells the block HEC_GENERATOR calculates the proper HEC field which will be introduced in the fifth byte of the cell through the multiplexer HEC_MUX_UP.

The complete cell is stored in the memory FIFO_TMR_UP.

The memory FIFO_TMR_UP is periodically scanned through a signal transmitted by the time base generator TIME_BASE_GENERATOR_UP on the wire Rd_tmr_up.

When the storage FIFO_TMR_UP contains a complete cell (53 bytes) this one is transmitted through the multiplexer CELL_MUX_UP on the bus Cell_DATA_UP of the interface Pb.

In the contrary case a cell of the "unassigned" type read by the memory EMPTY_CELL_ROM is transmitted, always through the multiplexer CELL_MUX_UP and towards the bus Cell_DATA_UP.

The performing of all these functions is controlled by the signals issued by the control unit CELL_RATE_DEC_UP and by the time base generator TIME_BASE_GEN_UP.

In particular the control unit CELL_RATE_DEC_UP issues the signals Rd_link_up, Wr_msg_up and Rd_msg_up which control the reading by the adapter SP_UP and the writing and reading in/by the memory FIFO_MSG_UP, respectively.

The time base generator TIME_BASE_GEN_UP sends the signals Cell_address, Wr_tmr_up and Rd_tmr_up able to perform respectively, the reading of EMPTY_CELL_ROM memory and the reading of the FIFO_TMR_UP memory.

The synchronization between control unit CELL_RATE_DEC_UP and the time base generator TIME_BASE_GEN_UP is carried out through signals transmitted on the wires Req_to_send and Ack_to_send.

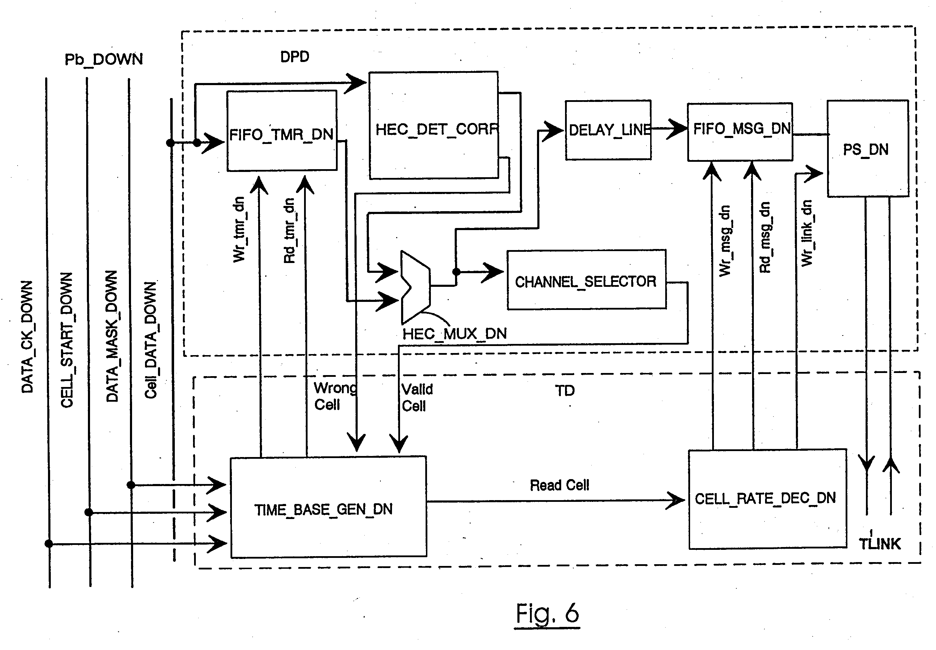

With reference to the enclosed Fig. 6 sowing in more details the structure of the device ATM_TRAN, here the detailed illustration of the functioning of the device ATM_TRAN in the processing of data belonging to the downstream flow.

On the downstream side the device ATM_TRAN is divided in two blocks marked by DPD (Data Path Downstream) and TD (Timing Downstream), respectively.

The block DPD comprises a memory FIFO_TRM_DN and a HEC detector/corrector labelled HEC_DET_CORR connected to a bus Cell_DATA_DN of the parallel interface of 8 bits Pb_DOWN.

The memory FIFO_TMR_DN and the detector HEC_DET_CORR are moreover connected through a multiplexer HEC_MUX_DN to a channel selector CHANNEL_SELECTOR and to a delay line DELAY_LINE.

The delay line DELAY_LINE is connected to a memory FIFO_MSG_DN.

The memory FIFO_MSG_DN is connected through a serial parallel adapter PS_DN to the transputer link TLINK.

The block TD of the device ATM_TRAN comprises a control unit CELL_RATE_DEC_DN connected through two wires Wr_msg_dn and Rd_Msg_dn to the memory FIFO_MSG_DN of the block DPD.

The control unit CELL_RATE_DEC_DN is moreover connected through a wire Wr_link_dn to the adapter PS_DN of the block DPD.

The block TD includes also a time base generator TIME_BASE_GEN_DN connected through a wire Read_Cell to the control unit CELL_RATE_DEC_DN.

The time base generator TIME_BASE_GEN_DN is moreover connected to three wires DATA_MASK_DN, CELL_START_DN and DATA_CK_DN of the parallel interface at 8 bits Pb_DOWN.

The time base generator TIME_BASE_GEN_DN is further connected through two wires wr_tmr_dn and rd_tmr_dn to the memory FIFO_TMR_DN, through a wire Wrong_Cell to the HEC detector/corrector HEC_DET_CORR and through a wire Valid_Cell to the channel selector CHANNEL_SELECTOR.

On the downstream side the device ATM_TRAN works as follows.

The ATM cells enter in a parallel way on 8 bits from the CELL_DATA_DN of the interface Pb_DOWN at a speed of 155 Mbit/s.

The cell is stored in the memory FIFO_TMR_DN and simultaneously the cell header is analyzed by the HEC detector/corrector HEC_DET_CORR.

The detector/corrector HEC_DET_CORR generates signals towards the multiplexer HEC_MUX_DN able to correct single errors possibly present in the header of the cell memorised in the FIFO_TMR_DN.

In case of multiple errors the detector/corrector HEC_DET_CORR sends a signal to the time base generator TIME_BASE_GEN_DN on the wire Wrong_Cell.

The cell stored in the memory FIFO_TMR_DN is forwarded through the multiplexer HEC_MUX_DN towards the delay line DELAY_LINE and towards the channel selector CHANNEL_SELECTOR.

In case the values of the fields VPI (Virtual Path Identifier) and VCI (Virtual Channel Identifier) of the cell identify the cell as belonging to the entity of the shaped channels the channel selector CHANNEL_SELECTOR transmits a signal to the time base generator TIME_BASE_GEN_DN on the wire Valid_Cell.

Once passed through the delay line DELAY_LINE the cell is memorised in the storage FIFO_MSG_DN with a parallelism of 8 bits and a speed of 155 Mbit/s.

Then the cell is converted in a serial way in the serial parallel adapter PS_DN at a speed of 20 Mbit/s and transmitted on the transputer link TLINK.

From the physical point of view the memory FIFO_MSG_DN thus carries out an operation of cell rate decoupling as it is written at 155 Mbit/s and read at 20 Mbit/s.

The performing of all these functions is controlled by signals transmitted by the control unit CELL_RATE_DEC_DN and by the time base generator TIME_BASE_GEN_DN.

In particular the time base generator TIME_BASE GEN_DN transmits the signals Wr_tmr_dn and Rd_tmr_dn controlling the writing and the reading in/from the memory FIFO_TMR_DN.

The time base generator TIME_BASE_GEN_DN receives the signal Wrong_Cell which indicates that the cell is affected by multiple error, and the signal Valid_Cell which indicates that the values of VPI and VCI enter the shaped channels.

If this last test is successful the time base generator TIME_BASE_GEN_DN transmits a signal on the wire Read_Cell towards the control unit CELL_RATE_DEC_DN.

The control unit CELL_RATE_DEC_DN generates for all cells qualified by the command Read_Cell the signals Wr_msg_dn, Rd_msg_dn and Wr_link_dn which control the writing and reading in/from the memory FIFO_MSG_DN and the writing of the serial parallel adapter PS_DN, respectively.

The functioning of the device ATM_PC_BOARD will be described in a more detailed way with reference to the operations relating to the conversion and data transfer functions among the different protocol levels illustrated in Fig. 2.

According to the invention, the communications between the different protocol levels are realized through primitives which are all characterized by the same format.

The different protocol levels will be indicated hereafter by the term module.

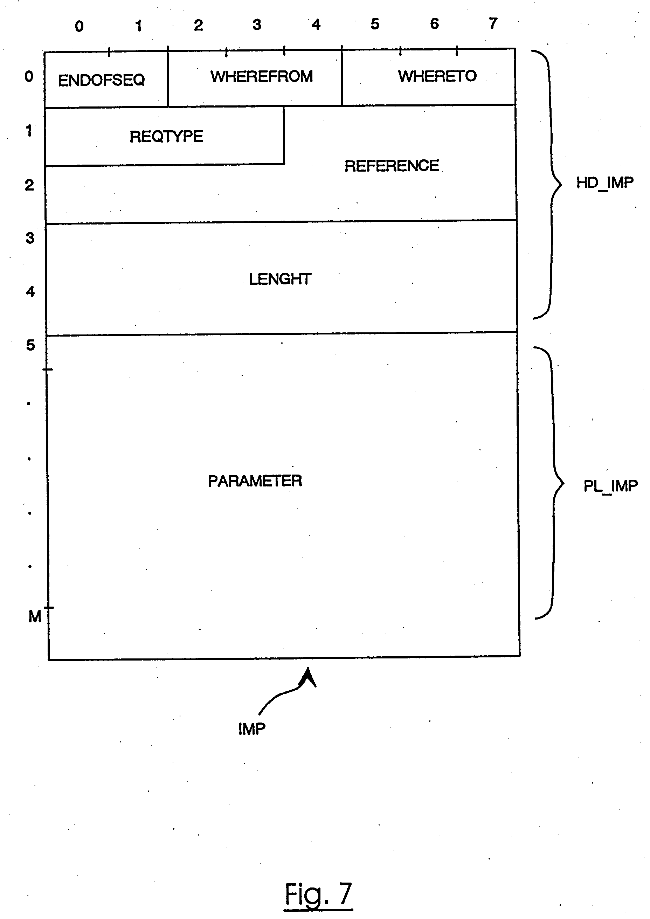

The format of such intermodule primitive in general labelled by IMP is shown in Fig. 7.

The primitive IMP is set up by a matrix of 8 columns and an indefinite number of lines. Each element of such matrix represents a bit.

The primitive IMP is divided in two parts, the header HD_IMP and the payload PL_IMP.

The header HD_IMP comprises the first five lines (40 bits) of the primitive IMP.

The bits 0-1 of the header HD_IMP contain a field ENDOFSEQ indicating if the primitive IMP carries an intermediate or final cell of the ATM cell sequence setting up a message.

The bits 2-4 of the header HD_IMP contain a field WHEREFROM indicating the module which has issued the message.

The bits 5-7 of the header HD_IMP contain a field WHERETO indicating the module which has received the message.

The bits 8-11 of the header HD_IMP contain a field REQTYPE indicating the Type of request has been made to the receiving module.

The bits 12-23 of the header HD_IMP contain a field REFERENCE indicating the ATM connection.

Finally the bits 24-39 of the header HD_IMP contain a field LENGTH indicating the length of the message contained in the payload part PL_IMP of the primitive IMP.

The payload part PL_IMP comprises a number N of lines of the primitive IMP representing the message PARAMETER to be transferred. Inside the message PARAMETER other service data is contained such as CRC, length of the individual data fields, etc.

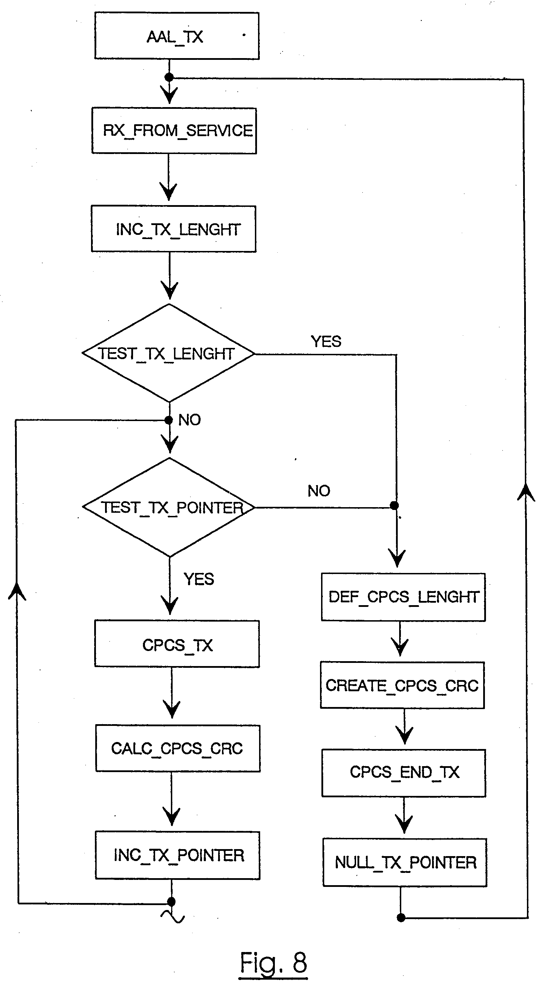

The meaning of the individual fields of the intermodule primitive will be clarified hereafter with reference to the enclosed figures 8-9 showing in details the functions carried out by the individual modules and the structures of the data exchanged between them.

Figure 8 is a flowchart showing the process according to the present invention by which a data packet of variable length generated by a software programme on a personal computer PC is transmitted on the ATM-SW network through the device ATM_PC_BOARD.

After a start-of phase AAL_Tx the device ATM_PC_BOARD is brought to a phase RX_FROM_SERVICE in which it prepares the level CPCS to receive data from its user.

After the phase RX_FROM_SERVICE the user has the possibility to transmit towards the level CPCS data blocks SSCS-PDU of a length included between 1 byte and 64 kbytes.

In the example of Fig. 8 the data packet to be transmitted has been generated by the sublayer SSCS. The case in which the data packet is directly generated by the software programme is conceptually the same and, therefore it will not be illustrated.

During each single transmission carried out from SSCS towards CPCS the individual fields of the intermodule primitive IMP will assume the following values:
ENDOFSEQ: the content of this field is not significant in this phase;
WHEREFROM: indicates the module SSCS from which the data packet SSCS-PDU arrives;
WHERETO: indicates the module CPCS where the data packet is addressed to;
REQTYPE: indicates the type of request made by SSCS to the CPCS (user's data transfer);
REFERENCE: indicates the connection ATM;
LENGTH: indicates the length of the transmitted message;
PARAMETER: contains the bytes of the message SSCS.
During the start-up phase AAL_Tx, the device ATM_PC_BOARD sets to zero the value of two variables Tx_Pointer and Tx_Length.

The variable Tx_Length indicates the global number of bytes of the present packet SSCS-PDU which have to be transmitted, while the variable Tx_Pointer indicates the number of bytes of the present packet SSCS-PDU which have been transmitted.

After the phase RX_FROM_SERVICE in which the device ATM_PC_BOARD has received the data from SSCS, it is put in a phase INC_TX_LENGTH during which the current value of the variable TX_LENGTH assumes a value equal to the value of the field LENGTH of the present packet SSCS-PDU increased by eight.

The increase is carried out as the total length of the message to be segmented in ATM cells is given by the total length of the message SSCS added to the control data length CPCS (trailer CPCS).

After the phase INC_TX_LENGTH the device ATM_PC_BOARD is brought to a phase TEST_TX_LENGTH during which is examined, if the current value of the variable TX_LENGTH is less or equal to 48.

In case the test TEST_TX_LENGTH has a negative result the device ATM_PC_BOARD is brought in a phase TEST_TX_POINTER during which it is checked if the present value of the difference between the variable TX_LENGTH and the variable TX_POINTER is more or equal to 48.

In case the result of the test TEST_TX_POINTER is positive, this means that the part of the message SSCS-PDU not yet transmitted has dimensions larger than 48 bytes, and therefore it cannot find a place inside a single segment SAR-PDU.

In this case the device ATM_PC_BOARDS is brought into a phase CPCS_Tx during which it transmits towards the ATM level a block SAR-PDU containing the 48 bytes of the message SSCS-PDU not yet transmitted.

The individual fields of the intermodule primitive IMP assume during the phase CPCS-Tx the following values:
ENDOFSEQ: assumes a wrong logic value;
WHEREFROM: indicates the module CPCS, from where the packet SAR-PDU arrives;
WHERETO: indicates the module ATM to which the data packet is sent;
REQTYPE: indicates the type of request made by the sublayer SAR to the level ATM (transfer of one cell);
REFERENCE: indicates the ATM connection;
LENGTH: indicates the number 48 equal to the length of a Block SAR-PDU;
PARAMETER: it contains the 48 bytes of the message SSCS starting from the value indicated by Tx_Pointer.

After the phase CPCS_Tx the device ATM_PC_BOARD is brought into a phase INC_TX_POINTER during which the present value of the variable TX_POINTER is increased by a value equal to 48, and the cycle starts again from the phase TEST_TX_POINTER.

In case the test TEST_TX_LENGTH has a positive result or in case the TEST_TX_POINTER has a negative result, this means that the message SSCS-PDU or its remaining part to be transmitted has dimensions smaller or equal to 48 bytes, and therefore it can find place in a single segment SAR-PDU.

In these cases the device ATM_PC_BOARD is put in phase DEF_CPCS_LENGTH during which it codifies the total length of the message CPCS-PDU in a suitable field of the control data of the same (CPCS-Trailer).

After the phase DEF_CPCS_LENGTH the device ATM_PC_BOARD is put in a phase CREATE_CPCS_CRC, a cyclic redundancy code CRC is created for the control of the content of the message CPCS.

Once this has been done the device ATM_PC_BOARD is put in a phase CPCS_END_Tx during which it transfers towards the ATM level a block SAR-PDU containing the last remaining bytes of the message SSCS-PDU.

The individual fields of the intermodule primitive IMP take during the phase CPCS_END_Tx the following values:
ENDOFSEQ: takes the true logical value;
WHEREFROM: indicates the module CPCS, from where the packet SAR-PDU arrives;
WHERETO: indicates the module ATM to which the data packet is sent;
REQTYPE: indicates the type of request made by the sublayer SAR to the level ATM (transfer of a cell);
REFERENCE: indicates the connection ATM;
LENGTH: indicates the number 48 equal to the length of a block SAR-PDU;
PARAMETER: contains the remaining 48 bytes of the message SSCS starting from the value indicated by Tx_Pointer. In general not all bytes of the field PARAMETER will be in this case significant.

After the phase CPCS_END_Tx the device ATM_PC_BOARD is put in a phase NUL_TX_POINTER during which the current value of the variable TX_POINTER is put to zero, and the cycle starts again from the phase RX_FROM_SERVICE waiting for data arriving from SSCS.

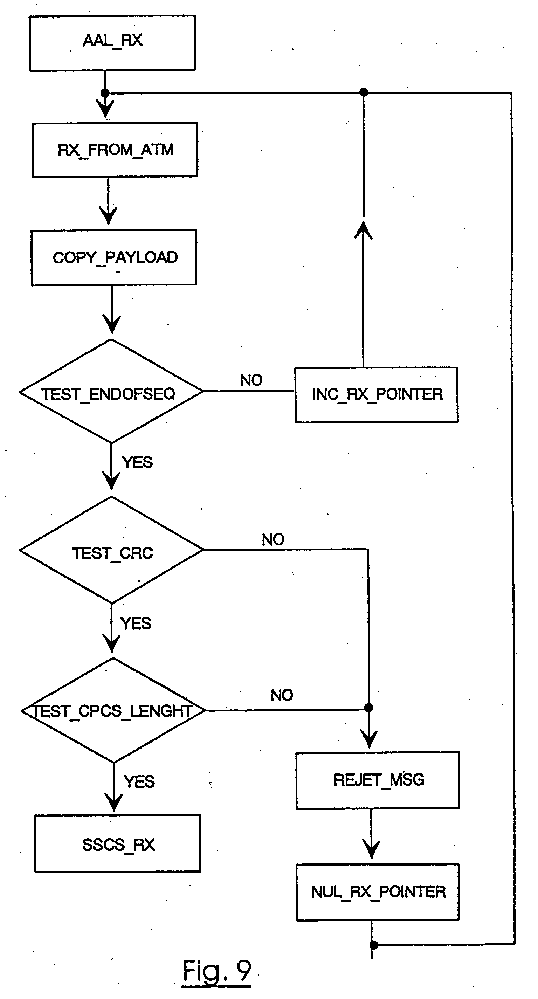

Fig. 9 shows a flow diagram which illustrates the process according to the present invention through which the payloads of the ATM cells are assembled until the formatting of a data packet of variable length acceptable for a software programme on personal computer has been completed.

After a starting-up phase AAL_Rx the device ATM_PC_BOARD is put into a phase RX_FROM_ATM during which the sublayer SAR of the module CPCS-SAR arranges to receive data from the level ATM, and during which the level ATM arranges to transfer towards the level SAR blocks SAR-PDU with a length equal to 48 bytes. Each one of these blocks SAR-PDU corresponds to the payload of an ATM cell received by the ATM level.

The individual fields of the intermodule primitive IMP take during the phase ATM_Rx the following values:
ENDOFSEQ: takes the logical value contained in the field PT of the ATM cell, which indicates if a cell is or is not the last one of the sequence of cell which form a packet used by the software programme;
WHEREFROM: indicates the ATM module from where the ATM cells arrive;
WHERETO: indicates the module CPCS to which the data packet is sent;
REQTYPE: indicates the type of request made by the ATM level towards the module CPCS-SAR (transfer of a payload);
REFERENCE: indicates the ATM connection;
LENGTH: indicates the number 48 equal to the length of a block SAR-PDU;
PARAMETER: contains the 48 byte-payload of the ATM cell.

During the start-up phase AAL_Rx the device ATM_PC_BOARD sets the value of a variable Rx_Pointer at zero.

The variable Rx_Pointer indicates the filling level of the buffer used for the reassembling of the packet.

After the phase ATM_Rx the device ATM_PC_BOARD is put into a phase COPY_PAYLOAD during which the payload of the ATM cell is copied in a receiving buffer at the position indicated by the current value of the variable Rx_Pointer.

After the phase COPY_PAYLOAD the device ATM_PC_BOARD is brought into a phase TEST_ENDOFSEQ during which is examined if the present value of the field ENDOFSEQ has a true logical value.

In case the result of the test TEST_ENDOFSEQ is negative the device ATM_PC_BOARD is put into a phase INC_RX_POINTER during which the present value of the variable Rx_POINTER is increased by 48, and the cycle starts again from the phase COPY_PAYLOAD.

In case of a positive result of the test TEST_ENDOFSEQ this means that the packet CPCS-PDU is complete.

In this case the device ATM_PC_BOARD is brought into a phase TEST_CRC during which is examined the correctness of the code CRC calculated on the basis of data contained in the packet CPCS-PDU itself.

In case the result of the test TEST_CRC is negative the device ATM_PC_BOARD is put into a phase REJECT_MSG during which the present message CPCS_PDU is rejected.

After the phase REJECT_MSG the device ATM_PC_BOARD is brought into a phase NUL_RX_POINTER during which the current value of the variable Rx_Pointer is imposed at zero.

In case the result of the test TEST_CRC is positive the device ATM_PC_BOARD is put in a phase TEST_CPCS_LENGTH during which is checked the consistency of the codified value in the "length" field of the control data CPCS (trailer CPCS) of the just received packet with the number of bytes really received by the network.

In case of a negative result of the test TEST_CPCS_LENGTH the device ATM_PC_BOARD is put into the phase REJECT_MSG.

In case of a positive result of the test TEST_CPCS_LENGTH the device ATM_PC_BOARD is brought into a phase SSCS_Rx during which it transfers towards the level SSCS a packet SSCS with a length equal to the value codified in the field "length" of the control data of the CPCS (trailer CPCS).

During the phase SSCS_Rx the individual fields of the intermodule primitive IMP take the following values:
ENDOFSEQ: the content of this field is not significant during this phase;
WHEREFROM: indicates the module CPCS from where the data packet arrives;
WHERETO: indicates the module SSCS to which the data packet is sent;
REQTYPE: indicates the type of request made by CPCS to SSCS (transfer of packet SSCS);
REFERENCE: indicates the connection ATM;
LENGTH: indicates the value contained in the field "length" of the CPCS trailer;
PARAMETER: contains the data packet SSCS-PDU.

Finally the device ATM_PC_BOARD is put in the phase NUL_RX_POINTER and the cycle starts again.

In the example of Fig. 9 the data packet to be transmitted is addressed to the sublayer SSCS. The case in which the data packet is directly forwarded to the software is conceptually identical, and therefore it is not illustrated.

In a useful way, thanks to the independence of the single transmission and receiving states, the transmission and receiving functions are carried out simultaneously in parallel.

This makes it possible to reassemble a packet addressed to the application or to SSCS in parallel to the segmentation of a packet in arrival from there.

While a particular embodiment of the present invention has been shown and described, it should be understood that the present invention is not limited thereto since other embodiments may be made by those skilled in the art without departing from the true spirit and scope thereof. It is thus contemplated that the present invention encompasses any and all such embodiments covered by the following claims.

## Claims

1. Device for the connection of a personal computer to an ATM type network, said device (ATM_PC_BOARD) being connected through an interface for personal computers (PC_BUS) to said personal computer(PC), and being connected through a serial interface (E/O) to a line terminal (LT) of said ATM type network, said personal computer carrying out transmission/reception means including the data transmission/reception function to/from said line terminal (LT) of said ATM type network, the data being transmitted/received by said personal computer (PC) in a generic format (HLP), said line terminal being suitable to change data in a physical ATM format (PHY) in which the data relating to the different services is organized under the form of information units of fixed length called ATM cells,
characterized in that said device (ATM_PC_BOARD) comprises a transputer board (TRANSP_BOARD) carrying out transformation operations of the data transmitted from said personal computer (PC) with said generic format (HLP) in data with a specific format (AAL-PDU) of the ATM protocol adaptation level (AAL), and vice versa, and means (ATM_TRAN, ATM_TC, STTF, RTFE) which carry out transformation operations on the data transmitted by said line terminal (LT) with said physical ATM format (PHY) in data with said specific format (AAL-PDU) of said ATM adaptation protocol level (AAL), and vice versa.

2. Device according to claim 1, characterized in that said means (ATM_TRAN, ATM_TC, STTF, RTFE) carrying out transformation functions on the data transferred by said line terminal with said physical ATM format (PHY) in data with said specific format (AAL-PDU) of said ATM adaptation protocol level (AAL), and vice versa, including:
- a device (ATM_TRAN) carrying out specific functionalities of the ATM protocol level and connected through a transputer interface (TLINK) to said transputer board ((TRANSP_BOARD);
- a device (ATM_TC) carrying out specific functionalities of the physical ATM protocol level (PHY) and linked through a parallel interface (Pb) to said device (ATM_TRAN) for data processing at ATM protocol level;
- a device (STTF) for the terminal transfer STM-1 and of termination of the High Order Path for SDH connected to said device (ATM_TC) for the data processing at a physical ATM protocol level (PHY);
- a serial parallel converter (RTFE) connected to said device (STTF) for the terminal transfer STM-1, and connected through said serial interface (E/O) to said line terminal (LT) of said ATM-type network.

3. Device according to claim 2, characterized in that said device (ATM_TRAN) for data processing at ATM protocol level includes:
- a block (DPU) for the upstream transfer of data coming from said transputer interface (TLINK) and being addressed to said parallel interface (Pb), said block (DPU) includes a serial parallel adapter (SP_UP) connected to said transputer interface (TLINK) and linked to a decoupling memory (FIFO_MSG_UP);
- a generator (HEC_GENERATOR) of control codes (HEC) for ATM cells connected to the output of said decoupling memory (FIFO_MSG_UP);
- a multiplexer (HEC_MUX_UP) connected to the outputs of said decoupling memory (FIFO_MSG_UP) and of said generator (HEC_GENERATOR) of control codes;
- a buffer memory (FIFO_TMR_UP) connected to the output of said multiplexer (HEC_MUX_UP) and connected (CELL_DATA_UP) to said parallel interface (Pb).

4. Device according to claim 3, characterized in that said device (ATM_TRAN) for the data processing at an ATM protocol level includes a control unit (CELL_RATE_DEC_UP) connected (Wr_msg_up, Rd_msg_up) to said decoupling memory (FIFO_MSG_UP) and connected (Rd_link_up) to said serial parallel adapter (SP_UP), and a time base generator (TIME_BASE_GEN_UP) connected (DATA_MASK_UP, CELL_START_UP, DATA_CK_UP) to said parallel interface (Pb), connected (Rg_to_send, Ack_to_send) to said control unit (CELL_RATE_DEC_UP), and connected (wr_tmr_up, rd_tmr_up) to said buffer memory (FIFO_TMR_UP).

5. Device according to claim 4, characterized in that said block (DPU) for the upstream data transfer includes a generator block of empty ATM cells (EMPTY_CELL_ROM, CELL_MUX_UP) connected (CELL_DATA_UP) to said parallel interface (Pb), and connected (Cell_address) to said time base generator (TIME_BASE_GEN_UP).

6. Device according to claim 2, characterized in that said device (ATM_TRAN) for the data processing at ATM protocol level comprises a block (DPD) for the downstream transfer of data arriving from said parallel interface (Pb) and addressed to said transputer interface (TLINK), said block (DPD) including a buffer memory (FIFO_TMR_DN) connected (CELL_DATA_DN) to said parallel interface (Pb), a code correction detector (HEC_DET_CORR) connected (CELL_DATA_DN) to said parallel interface (Pb), and to said buffer memory (FIFO_TMR_DN), a multiplexer (HEC_MUX_DN) connected to said buffer memory (FIFO_TMR_DN, and to said code correction detector (HEC_DET_CORR), a channel selector (CHANNEL_SELECTOR) connected to the output of said multiplexer (HEC_MUX_DN), a delay line (DELAY_LINE) connected to the output of said multiplexer (HEC_MUX_DN), a decoupling memory (FIFO_MSG_DN) connected to the output of said delay line (DELAY_LINE), and a serial parallel adapter (PS_DN) connected to the output of said decoupling memory (FIFO_MSG_DN), and connected to said transputer interface (TLINK).

7. Device according to claim 6, characterized in that said device (ATM_TRAN) for the data processing at an ATM protocol level comprises a control unit (CELL_RATE_DEC_DN) linked (Wr_msg_dn, Rd_msg_dn) to said decoupling memory (FIFO_MSG_DN), and connected (Rd_lnk_dn) to said serial parallel adapter (PS_UP), and a time base generator (TIME_BASE_GEN_DN) connected (DATA_MASK_DN, CELL_START_DN, DATA_CK_DN) to said parallel interface (Pb), connected (Read_cell) to said control unit (CELL_RATE_DEC_DN), connected (wr_tmr_dn, rd_tmr_dn) to said buffer memory (FIFO_TMR_DN), connected (Wrong_cell) to said code correction detector (HEC_DET_CORR) and connected (Valid_cell) to said channel selector (CHANNEL_SELECTOR).

8. Device according to claim 1, characterized in that said transputer board (TRANSP_BOARD) comprises internal memory units (TRAM).

9. Device according to claim 1, characterized in that said transputer board (TRANSP_BOARD) comprises a number of transputer more than one.

10. Method for the connection of a personal computer to an ATM-type network, said personal computer (PC) carrying out software programmes which include the transmit/receive data function towards/from a line termination (LT) of said ATM-type network, the data being transmitted/received by said personal computer (PC) in a generic format (HLP), the data being transmitted/received by said line termination (LT) in a physical ATM format (PHY) in which the data relating to the different services are organized under the form of information units of fixed length called ATM cells, being the conversion of the data transmitted by said personal computer in ATM cells realized through the following orderly sequence of protocol levels:
- software application level (HLP);
- ATM adaptation level (AAL);
- ATM level (ATML); and
- physical ATM level (PHY);
said ATM adaptation level (AAL) being subdivided in:
- convergence sublayer (CS), and
- segmentation and reassembling sublayer (SAR),
said convergence sublayer (CS) being divided in:
- service specific convergence sublayer (SSCS); and
- common part convergence sublayer (CPCS)
the conversion of the ATM cells in data receivable by said personal computer (PC) with said software programme format (HLP) being realized through said orderly sequence of protocol levels carried out in inverted order with respect to the previous one,
characterized in that the data transmitted by said personal computer (PC) with said software programme format (HLP) are converted in data with a format (AAL-PDU) specific to said ATM protocol adaptation level (AAL) by means of a transputer board (TRANSP_BOARD) independent from said personal computer (PC), and in that the data with said format (AAL-PDU) specific for said ATM protocol adaptation level (AAL) is converted in data with said software programme format (HLP) through said transputer board (TRANSP_BOARD).

11. Method according to claim 10, characterized in that said data with said format (AAL-PDU) specific of the ATM protocol adaptation level (AAL) supplied by said transputer board (TRANSP_BOARD) are converted in a specific format of said ATM protocol level (ATML) through the following steps:
- converting the data supplied by said transputer board in a parallel format;
- inserting said data converted in a parallel format into a decoupling memory (FIFO_MSG_UP);
- calculating a control code (HEC);
- inserting said control code (HEC) and said memorised data in said decoupling memory (FIFO_MSG_UP) inside a buffer memory (FIFO_TMR_UP) in such a way to create an ATM cell;
- scanning periodically said buffer memory (FIFO_MSG_UP) inside a buffer memory (FIFO_TMR_UP) in order to check the presence of data in a format specific of said ATM protocol level (ATML), i.e. of a complete ATM cell.

12. Method according to claim 11, characterized in that said step of scanning periodically said buffer memory (FIFO_TMR_UP) to check the presence of a complete ATM cell comprises the further step of generating an empty ATM cell in case of absence of a complete ATM cell.

13. Method according to claim 10, characterized in that said data in a format specific of said ATM protocol level (ATML) is converted in said format (AAL-PDU) specific of said ATM protocol adaptation level (AAL) through the following steps:
- memorizing the incoming data received in a format specific of said ATM protocol level (ATML), i.e. under the form of an ATM cell, in the buffer memory (FIFO_TMR_DN);
- extracting a control code (HEC) from said ATM cell memorized in said buffer memory (FIFO_TMR_DN);
- checking the absence of errors inside said ATM cell through the data contained in said control code (HEC);
- in case errors are present inside said ATM cell, tempting to correct said ATM cell by means of the informations included in said control code (HEC);
- checking the belonging of said ATM cell to one of the channels regarding the software programme carried out by said personal computer (PC);
- in case said ATM cell belongs to one of said channels, memorizing said ATM cell in a buffer memory (FIFO_TMR_DN);
- converting the data memorised in said buffer memory (FIFO_TMR_DN) in data of a serial format;
- transferring said data in serial format towards said transputer board (TRANSP_BOARD).

14. Method according to claim 13, characterized in that said step of tempting to correct said ATM cell through the data contained in said control code (HEC) comprises the further step of generating an error signal (Wrong_cell) in case of impossibility to correct said ATM cell.

15. Method according to claim 10, characterized in that all communications between the different levels of said orderly sequence of protocol levels are carried out through exchanges of intermodule primitives (IMP) with a common format, said intermodule primitives (IMP) including the following fields:
- a field of the logical type (ENDOFSEQ) indicating if the primitive (IMP) carries an intermediate or final ATM cell of an ATM cell sequence carrying a message;
- a field (WHEREFROM) indicating the protocol level having sent the message;
- a field (WHERETO) indicating the protocol level having received the message;
- a field (REQTYPE) indicating the type of request made to the receiving protocol level;
- a field (REFERENCE) indicating the ATM connection;
- a field (LENGTH) indicating the length of the message contained in the payload of said intermodule primitive (IMP); and
- a payload field of variable length indicated by the value of said field (LENGTH) showing the length of the message.
